# EUROPEAN PATENT APPLICATION

(11) **EP 3 343 205 A1**
(43) Date of publication of application: **04.07.2018**
(21) Application number: 16382678.7
(22) Date of filing: 30.12.2016
(51) Int. Cl.: G01N 21/71, B07C 5/342, G01J 3/443, G01J 3/02, G01J 3/20, G01N 21/84

(54) **A SYSTEM FOR ANALYSING THE CHEMICAL COMPOSITION OF A TARGET MATERIAL AND CORRESPONDING PROCESS**

(71) Applicant: Lenz Instruments S.L., 08019 Barcelona (ES)
(72) Inventor: Philippet, Laurent, 08029 BARCELONA (ES); Romero López, David, 08019 BARCELONA (ES); Williams, Mark, 08019 BARCELONA (ES); Rodríguez Ventura, Juan Manuel, 08019 BARCELONA (ES); Álvarez García, Jacobo, 08019 BARCELONA (ES)
(74) Representative: Curell Suñol S.L.P.

(57) **Abstract**

1.- A system (1) for analysing the chemical composition of a target material (100) comprising: [a] a laser system (2) [b] at least one scanner assembly for directing said laser beam (4) onto said target material (100) to produce luminous plasma on said target material (100) and to collect the light emitted thereafter, and [c] a spectral analyser (10). The scanner assembly further comprises at least [d] first light redirecting means (12) being configured such as to let the light pass therethrough when the light falls on one first side (14) of said first light redirecting means (12) and to redirect at least part of the light when the light falls on a second opposite side (16) opposite. Said first light redirecting means (12) are arranged in the system (1) to gather said light emitted by said plasma, collinearly with the laser beam directed onto said target material (100) and to redirect said light emitted by said plasma onto said first focusing means (6).

## Description

### DESCRIPTION

### Field of the invention

The invention relates to a system for analysing the chemical composition of a target material comprising: a laser system comprising at least one laser for providing a laser beam of laser pulses, at least one scanner assembly for directing said laser beam onto said target material such as to produce luminous plasma on said target material and to collect the light emitted by said plasma, said scanner assembly comprising: first focusing means, arranged downstream of said laser system, and a light collector arranged downstream of said first focusing means for collecting the light emitted by said plasma passing through said first focusing means, and a spectral analyser for receiving light from said light collector for isolating and measuring at least one selected emission band from the light collected by said light collector.

The invention further refers to a process for analysing the chemical composition of a target material with a system according to the invention, the process comprising the steps of: emitting a laser beam on to the surface of said target material, such as to produce luminous plasma on said target material and collecting the light emitted by said plasma, and isolating and measuring at least one selected emission band contained in the light emitted by said plasma.

### State of the art

The spectroscopy technique, most commonly known as Laser-Induced Breakdown Spectroscopy (LIBS), uses a focused laser beam to vaporize and subsequently produce a luminous plasma containing spectral line emissions from a sample material. In this way samples placed at a distance from the analysing instrumentation, can be analysed for their chemical composition. Since objects located at a distance can be analysed rapidly using LIBS, just in few microseconds, the method has been described for several applications related to remote and/or fast chemical analyses.

In particular, many practical applications involve the chemical analysis of a large area by LIBS. Document US 2003/0132142 A1 discloses a system for sorting randomly positioned, irregularly, scrap particles are fed onto a moving conveyor, and are ejected into different bins according to their chemical composition, as determined by a LIBS system. The system of US 2003/0132142 A1 includes, amongst other elements, a laser system, a scanner system to direct focused laser pulses to a selected location within a two-dimensional target area on the surface of a conveyor, a light collector for receiving light in the target area from the plasma generated by the laser pulses, and a light distribution and spectral analyser system for isolating and measuring at least one selected emission band contained within the light from the LIBS plasma.

The collection of light from a static plasma discharge can be performed using conventional imaging optics, which couple the emitted light to the spectral analyser. However, the efficient collection of light from an extended surface is substantially more complex. In this case, since the position of the plasma spot can vary across a large surface, it is difficult to use high aperture optics to collect light, while maintaining an acceptable depth of field and good transmission over the ultraviolet-visible spectral range. In document US 2003/0132142 A1, the preferred implementation of the light collector is configured as a plurality of optical fibres distributed separately within the scanner housing for collecting the light from the LIBS plasma. However, this approach presents several disadvantages. First, the light collection efficiency of a single fibre covering a large area compared to its core diameter is low. Moreover, the optical throughput of the system is further reduced due to the need for transmitting the light received from multiple fibres, to the spectral analyser. This step usually involves the use of an integrating sphere, or an equivalent arrangement, which results in a drastic reduction of the optical efficiency of the system. Besides these limitations, the use of multiple fibres to collect light has disadvantages in terms of cost, complexity, and reliability.

### Summary of the invention

It is an object of the invention to provide a system for analysing the chemical composition of a target material which is more sensitive and that therefore that system has lower energy requirements.

The invention has the further object of improving the service life of the system.

This purpose is achieved by a system of the type indicated at the beginning, characterized in that said scanner assembly further comprises at least first light redirecting means arranged downstream of said laser system, said first light redirecting means, being configured such as to let the light pass therethrough when the light falls on one first side of said first light redirecting means and to redirect at least part of the light when the light falls on a second side opposite to said first side, and in that said first light redirecting means are arranged in said system to gather said light emitted by said plasma, collinearly with said laser beam directed onto said target material and to redirect at least part of said light emitted by said plasma onto said first focusing means.

A major issue in the design of a LIBS system able to analyse a large surface area deals with the efficient collection of the light emitted by the plasma. Since the duration of the plasma created by the laser shot is just a few microseconds, it is extremely important to collect as much as light as possible, to increase the sensitivity of the system, and to minimise the required laser power. Reducing the laser power allows using cheaper and more compact lasers, while allow increasing the service life of the optical components. Therefore, an efficient collection of light results in a more sensitive, more reliable and less expensive LIBS system.

Furthermore, lower pulse energies are associated with most durable and affordable laser, and optical components.

The target material can be for example, among others unsorted scrap material or simply unsorted parts with different chemical compositions. It is particularly desirable to efficiently separate metal and other scrap into families with similar chemical composition, since scrap sorted in this way has a higher value for recycling, than mixed scrap with dissimilar chemical composition. It is also desirable in manufacturing processes to perform a fast, an in-line analysis of materials being produced, to confirm the composition and/or quality of those materials.

The invention further includes a number of preferred features that are object of the dependent claims and the utility of which will be highlighted hereinafter in the detailed description of an embodiment of the invention.

In one preferred embodiment of the invention the system further comprises second light redirecting means arranged downstream of said first light redirecting means, for redirecting said light emitted by said plasma, onto said first focusing means either directly or via said second side of said first light redirecting means. Thanks to this second light redirecting means, both the laser system and the spectral analyser can be arranged, if so wanted, parallel to one another, and therefore a more compact system is achieved.

According to another optional feature of the invention, the system further comprises third light redirecting means arranged between said laser system and said first light redirecting means for redirecting said laser beam onto said first side of said first light redirecting means. Thanks to this configuration, it is possible to ensure a high throughput of the optical collection system while varying the position of the focusing spot. This allows covering a large inspection area with a high optical efficiency, without the need for introducing additional optical elements.

According to another preferred embodiment of the invention in the system said third light redirecting means is rotatably reciprocatingly mounted around an axis. This has the advantage that a larger inspection area can be covered by reducing the parts of the system that need to be moved for the inspection and analysis. Therefore a greater inspection speed is achieved.

In another embodiment, looking for a simple configuration, preferably said first light redirecting means is one of the group of a perforated mirror, a semitransparent mirror or a dichroic mirror. This provides an easy construction. Additionally, in the case of the perforated mirror a very simple an unexpensive configuration can be achieved.

According to an alternative of the invention, the second and third light redirecting means is a mirror.

According to a preferred embodiment of the invention, the system further comprises laser beam expanding means arranged between said laser system and said third light redirecting means for expanding said laser beam before it falls onto said third light redirecting means. This reduces de intensity of the laser beam incident on the subsequent optical components. Therefore, the likelihood of damage of the several optical components of the system is notably reduced.

Preferably, the system further comprises second focusing means arranged between said third light redirecting means and said first light redirecting means. This second focusing means focuses the laser beam coming from the third light redirecting means to form a small spot lying on or close to the target material. Again, this enhances the efficacy of the laser beam producing the plasma. Therefore, again the laser power required can be reduced. This leads again to the synergistic effect of less damage on the system parts and therefore to a longer service life.

In a specially preferred embodiment, looking for a higher analysis speed the system according to the invention further comprises a supporting surface for supporting said target material and said supporting surface and said scanner assembly are movable relative to each other.

In another alternative embodiment of the invention the supporting surface is movable along a longitudinal direction.

In another preferred embodiment said scanner assembly is arranged over said supporting surface and said second light redirecting means is rotatably reciprocatingly mounted around an axis parallel to said longitudinal direction such as to scan the width of said supporting surface in a plane perpendicular to said longitudinal direction. This leads to high speed scanning with low energy consumption, since only the second light redirecting means can move. Since the second light redirecting means is, for example, simply a mirror, due to low inertia high precision during the scanning process can be achieved.

According to another embodiment, the system further comprises an array of detection devices arranged upstream of said scanner assembly and covering the width of said supporting surface, said detection devices being a plurality of inductive or capacitive sensors.

Especially preferably said detection device is arranged below said supporting surface.

Finally, the invention also provides a process for analysing the chemical composition of a target material characterised in that the light emitted by said plasma is collected collinearly with at least the section of the laser beam falling on said target material for producing the luminous plasma and redirected onto the aperture of the light collector of the system.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1, shows, schematically, a first embodiment of a system for analysing the chemical composition of a target material according to the invention.
Figure 2, shows, schematically, a second embodiment of a system for analysing the chemical composition of a target material according to the invention.
Figure 3, shows, schematically, a third embodiment of a system for analysing the chemical composition of a target material according to the invention.
Figure 4, shows, schematically, a fourth embodiment of a system for analysing the chemical composition of a target material according to the invention.
Figure 5, shows, a top view of a fifth embodiment of a system for analysing the chemical composition of a target material according to the invention.
Figure 6, shows, a simplified front view of the embodiment of figure 5.

### Detailed description of embodiments of the invention

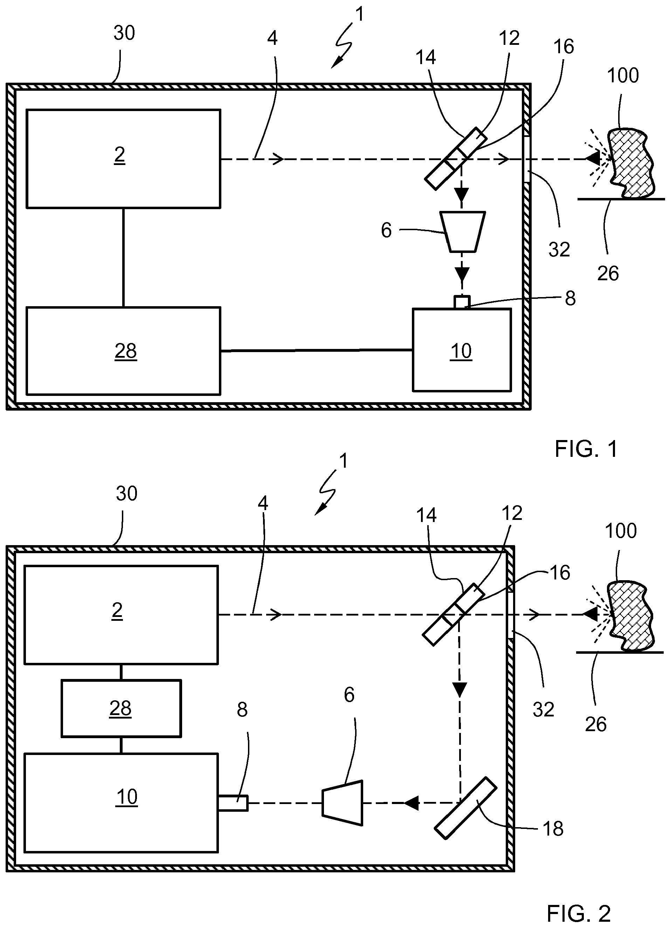

Figure 1 shows a first embodiment of the system 1 for analysing the chemical composition of a target material 100 of the invention. The target material 100 is preferably a metallic scrap part or parts placed on a static supporting surface 26.

The system 1 according to the invention comprises mainly following elements: a laser system 2, a scanner assembly, a spectral analyser 10 and finally control means 28, not shown in detail, responsible for controlling the operation of the laser system 2, the scanner assembly and the spectral analyser 10. All these elements are arranged within a housing 30 comprising a protective window 32 through which laser light can be projected onto the target material 100 to be analysed.

The laser system 2 comprises at least one laser device. This laser device provides a laser beam 4 of laser pulses within a short time interval which in the figures is indicated with arrows made from two converging segments. Preferably, the laser system uses a solid-state laser, like a neodymium-doped yttrium aluminium garnet, commonly known in the art as Nd:YAG laser.

The scanner assembly of system of the invention is configured to direct the laser beam 4 coming from the laser system 2 onto the target material 100. This laser beam 4 has an energy level that is high enough to produce luminous plasma by vaporising the target material 100 but lower as the systems known in the art. The light emitted by the target material 100 and the collecting path thereof is indicated in the figures with solid arrows. Furthermore, to produce luminous plasma is desirable to provide a plurality of pulses within a short time interval such that each of the pulses falls on the target material 100 to be analysed within a distance of less than few hundred micrometers. In a preferred embodiment of the invention up to 4 laser pulses may be directed on the target material 100, with an interpulse delay of 0.5 to 100 microseconds, using one or several triggerable Nd:YAG laser devices. As it will be apparent in other embodiments, it is also contemplated that the system 1 comprises a plurality of scanner assemblies. In embodiments where a plurality of scanner assemblies are employed to cover a surface area which is larger than what it would be possible with a single scanner assembly, the control system preferably triggers the firing of each laser system, such that one and only one laser fires as any one time, and such that the light from one, and one only scanner assembly, reaches the spectral analyser system at any one time.

The scanner assembly comprises first focusing means 6 arranged downstream of the laser system 2. The focusing means is, e.g. a focusing lens, causes the laser beam 4 to converge in order to form a spot at a defined distance of the lens. Additionally, a light collector 8 is arranged downstream of the first focusing means 6. This light collector 8, which is preferably a single optical fibre, or a compact fibre bundle of optical fibres, collects the light emitted by the plasma passing first through the first focusing means 6 before reaching the light collector 8.

The scanner assembly further comprises first light redirecting means 12 arranged downstream of the laser system 2. In order to achieve a more sensitive system having lower energy requirements, the first light redirecting means 12 are configured to let the laser light pass therethrough when the light falls on one first side 14 thereof and to redirect or deflect at least part of the light emitted by the surface on which the laser light falls on, when the returning light falls on a second side 16 opposite to the first side 14. Particularly preferably the first light redirecting means 12 is one of the group of a perforated mirror, a semitransparent mirror or a dichroic mirror. Furthermore, as it is apparent from figure 1, the first light redirecting means 12 is arranged between the laser system 2 and the first focusing means 6. Thus, the first light redirecting means 12 gather the light emitted by the plasma, collinearly with the laser beam 4 responsible of producing the luminous plasma on the target material 100 and redirect at least part of this light emitted by the plasma onto the first focusing means 6 and from here to the light collector 8.

Finally, the spectral analyser 10 is provided for receiving the light from the light collector 8 and for isolating and measuring at least one selected emission band from the light emitted by the plasma and collected via the light collector 8.

Preferably, the spectral analyser 10 is in the form of a Rowland circle polychromator with detectors placed at one or more spectral regions of interest. Each of the detectors is preferably a multichannel photomultipler tube (PMT) arranged such that each of the PMT channels accumulates the light from a small spectral range, and where the totality of the multiple channels in each multichannel PMT cover a proportionally wider spectral range. In cases where the system contains a plurality of scanner assemblies, it is preferable that the optical fibres from each of the scanner assemblies are arranged to form a line at the entrance slit of the polychromator, such that a given emission wavelength emitted from each fibre, will fall on the same channel of a given PMT. PMT are advantageous in this respect, due to their tall photosensitive channels, allowing the same wavelength emanating from a plurality of optical fibres arranged in a line at the entrance slit of the spectral analyser to fall on the same channel of a given PMT.

As already explained, both the laser system 2 and the spectral analyser are timely and operatively controlled by the control means 28, e.g. a computer or the like. In other words, the control means 28 includes the hardware and electronic components necessary not only for controlling but also to properly operating the other elements of the system.

Back to the invention, particularly thanks to the first light redirecting means, the light emitted by the plasma can be collinearly collected. This collinearity allows lower laser energy to be used, improves the sensitivity and clearly simplifies the construction of the system. In the system known in the art, in which several optical fibres arranged side by side along the scanner system to collect the light emitted by the plasma, an integration sphere is needed to collect the light before it being introduced in the spectral analyser.

The system of figure 1 is static, that is, neither the system 1 nor the target material 100 move relative to each other during operation and analysis. However, it is contemplated that one of both could move or event both elements could move during the analysis in order to measure different points of the target material 100.

Below, further embodiments of the invention are described sharing most of the technical features of the embodiment of figure 1. Therefore, in the next embodiments the described features are only those differing from the features of the embodiment of figure 1. For all other common features, reference is made to the description of the previous paragraphs.

In the embodiment of figure 2, a part from all parts already described, the system 1 further comprises second light redirecting means 18 arranged downstream of the first light redirecting means 12. This second light redirecting means 18 is a reflecting surface such as a mirror, or any other reflecting surface made of a material able to redirect the laser beam and to withstand the heat generated by the laser beam 4. Thanks to this element, the light emitted by the plasma is redirected or deflected onto the first focusing means 6 directly after being deflected by the second light redirected means 18.

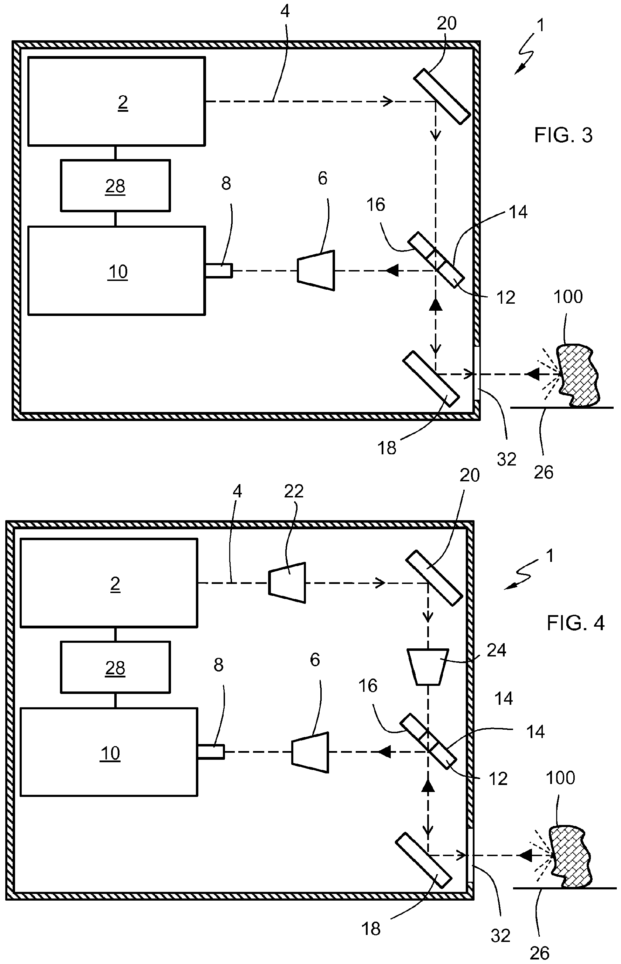

The embodiment of figure 3 is also similar to the embodiment of figure 2. However, in this case, the second light redirecting means 18 is arranged downstream of the first light redirecting means 12 differently to the previous embodiment. In this case, the element receiving first the light emitted by the target material 100 is the second light redirecting means 18 instead of the first light redirecting means 12. Therefore, third light redirecting means 20 needs to be arranged between the laser system 2 and the first light redirecting means 12. This provides also a compacter system. Again, this third light redirecting means 20 is also a mirror or an equivalent reflecting surface as it was the case of the second light redirecting means 18. Therefore, as it is apparent from figure 3, the laser beam first falls onto the third light redirecting means 20 and it is deflected onto the first side 14 of the first light redirecting means 12 to pass therethrough and to fall onto the second light redirecting means 18. From there and once deflected, the laser beam 4 exits the housing 30 through protective window 32 and falls onto the target material 100 for producing luminous plasma. This emitted light is received by the second light redirecting means 18 and redirected onto the second side 16 of the first light redirecting means 12 to be redirected onto the focusing means 6 and afterwards being collected by the optical fibre to be analysed in the spectral analyser 10.

The embodiment of figure 4 is based on the embodiment of figure 3. However, in this case, the system 1 further comprises laser beam expanding means 22 arranged between the laser system 2 and the third light redirecting means 20 for expanding said laser beam 4 before it falls onto said third light redirecting means 20. The laser beam expanding means 22 expands the laser beam 4 to a wider diameter. This reduces the intensity of the laser beam 4 incident on the subsequent optical components. Therefore, the likelihood of damage of the optical components is reduced.

Additionally the system 1 of figure 4 further comprises second focusing means 24 arranged between the third light redirecting means 20 and the first light redirecting means 12. This second focusing means 24 makes the laser beam 4 converge to form a small spot which lies on or close to the surface of the target material 100. Therefore, a more efficient system is obtained, because again a lower laser intensity can be used to produce plasma on the surface of the target material 100.

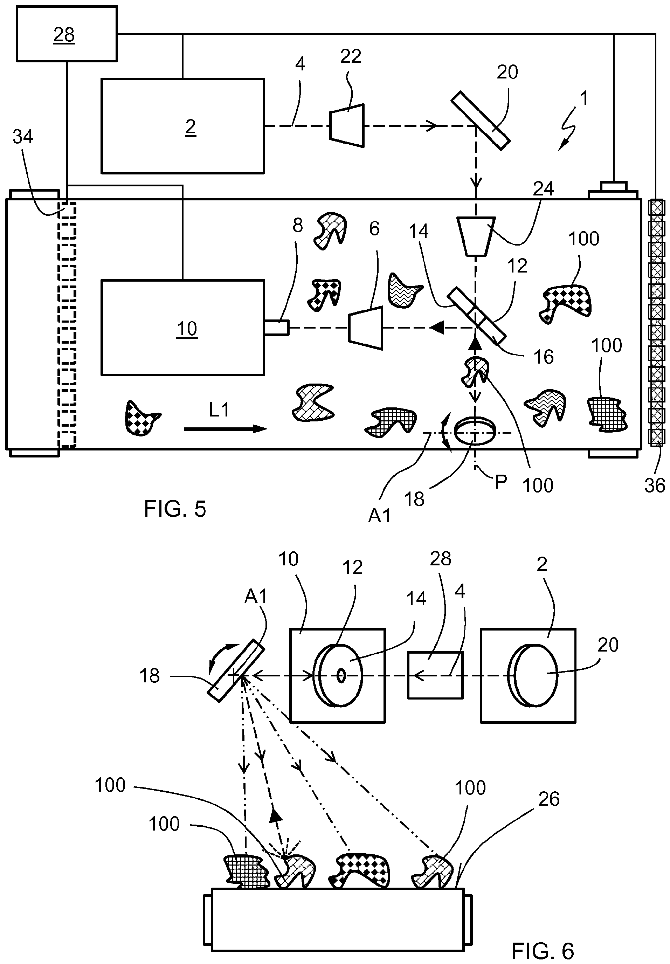

Finally, the embodiment of figures 5 and 6 is mainly based on the embodiment of figure 4. Even if it is not depicted in this case, the laser system, the scanner assembly and the spectral analyser are also contained within a housing.

Differently to the previous embodiment, the system is provided to be arranged over the supporting surface 26 for supporting said target material 100 in order to analyse the target material 100 passing by below the scanner assembly. Therefore, in order to increase the performance of the system, the supporting surface 26 and the scanner assembly are movable relative to each other. In particular, in this case, the supporting surface 26 is a conveyor belt which moves along a longitudinal direction L at speeds up to 3 m/s. Alternatively the scanner assembly could also move longitudinally along the supporting surface 26.

On the other hand, and differently to the embodiment of figure 4, in order for the system to increase the inspection speed, the second light redirecting means 18 is rotatably reciprocatingly mounted around an axis A1. This axis A1 is parallel to the longitudinal direction L and thus it allows scanning the complete width of the conveyor in a plane P perpendicular to the longitudinal direction L. To control the rotation of the second light redirecting means, a galvanometric control or a stepper motor can be applied.

Also, in this case, the laser beam expanding means 22 is also relevant in order to correctly scan the whole width of the supporting surface 26. Thanks to the fact that the diameter of the laser beam 4 can be modified the laser focus depth of field can be controlled such as to accommodate the variation in the laser focal point from the surface due to the scanning range, and also to accommodate a reasonable range of distance between the rotating mirror and the surface of the target material.

All the system 1 of figures 4 and 5 can be combined with a detection device 34, such as an array of inductive or capacitive sensors, arranged upstream of the scanner assembly. The system further comprises a sorting device 36 arranged downstream of the scanner assembly. This sorting device can be, for example, a robot arm or a blowing device.

In this case, the control means 28 also centrally control the detection device 34 and the sorting device 36. The detection device 34 allows for the determination of the position of target material 100 on the conveyor. Therefore, once the spectral analyser has determined if the target material 100 is to be selected or not, then the sorting device 36 downstream of the scanner assembly can decide and select where to place the corresponding sample.

It must also be pointed out, that generally, the light expanding means 22 and third light redirecting means 20 are preferably optimized for the wavelength of the laser beam 4. The optical properties of the first light redirecting means 12 and of the first focusing means and of the light collector 8 are preferably optimized for the wavelengths of interest within the LIBS plasma. The optical properties of the second light redirecting means 18 and of the protective window 32 are preferably optimized for both the wavelength of the laser beam and for wavelengths of interest contained in the LIBS plasma.

In some laser systems, it is preferable to maintain a near constant laser trigger frequency to achieve more stable thermal conditions within the laser, such that the laser produces more stable pulses. In such cases the second light redirecting means may be rotated to a dump zones, located at both sides of the protective window 32 and with the laser beam 4 directed towards one of the dump zones, one or more laser pulses may be fired to maintain thermal conditions within the laser, without giving rise to LIBS plasma during said shots.

The system of the present invention thus effectively analyses the chemical composition of target points on a surface based on the optical analysis of the laser-induced plasma produced at those target points.

While the best mode for carrying out the invention has been described in detail, the skilled person will recognize various alternative designs and embodiments for putting the invention into practice and which can be based on the combination of the embodiments already described.

## Claims

1. A system (1) for analysing the chemical composition of a target material (100) comprising:
[a] a laser system (2) comprising at least one laser for providing a laser beam (4) of laser pulses,
[b] at least one scanner assembly for directing said laser beam (4) onto said target material (100) such as to produce luminous plasma on said target material (100) and to collect the light emitted by said plasma, said scanner assembly comprising:
[i] first focusing means (6), arranged downstream of said laser system (2), and
[ii] a light collector (8) arranged downstream of said first focusing means (6) for collecting the light emitted by said plasma passing through said first focusing means (6), and
[c] a spectral analyser (10) for receiving light from said light collector (8) for isolating and measuring at least one selected emission band from the light collected by said light collector (8),
**characterized in that** said scanner assembly further comprises at least
[d] first light redirecting means (12) arranged downstream of said laser system (2),
[e] said first light redirecting means (12), being configured such as to let the light pass therethrough when the light falls on one first side (14) of said first light redirecting means (12) and to redirect at least part of the light when the light falls on a second side (16) opposite to said first side (14), and **in that**
[f] said first light redirecting means (12) are arranged in said system (1)
[i] to gather said light emitted by said plasma, collinearly with said laser beam directed onto said target material (100) and
[ii] to redirect at least part of said light emitted by said plasma onto said first focusing means (6).

2. The system of claim 1, **characterized in that** it further comprises second light redirecting means (18) arranged downstream of said first light redirecting means (12), for redirecting said light emitted by said plasma, onto said first focusing means (6) either directly or via said second side (16) of said first light redirecting means (12).

3. The system of claim 2, **characterized in that** it further comprises third light redirecting means (20) arranged between said laser system (2) and said first light redirecting means (12) for redirecting said laser beam (4) onto said first side (14) of said first light redirecting means (12).

4. The system of claim 3, **characterized in that** said second light redirecting means (18) is rotatably reciprocatingly mounted around an axis (A1).

5. The system of any of claims 1 to 4, **characterized in that** said first light redirecting means (12) is one of the group of a perforated mirror, a semitransparent mirror or a dichroic mirror.

6. The system of any of claims 2 to 5, **characterized in that** said second and third light redirecting means (18, 20) is a mirror.

7. The system of any of claims 3 to 6, **characterized in that** it further comprises laser beam expanding means (22) arranged between said laser system (2) and said third light redirecting means (20) for expanding said laser beam (4) before it falls onto said third light redirecting means (20).

8. The system of claim 7, **characterized in that** it further comprises second focusing means (24) arranged between said third light redirecting means (20) and said first light redirecting means (12).

9. The system of any of claims 1 to 9, **characterized in that** it further comprises a supporting surface (26) for supporting said target material (100) and **in that** said supporting surface (26) and said scanner assembly are movable relative to each other.

10. The system of claim 9 when depending on any of claims 4 to 8, **characterized in that** said supporting surface (26) is movable along a longitudinal direction (L).

11. The system of claim 10, **characterized in that** said scanner assembly is arranged over said supporting surface (26) and **in that** said second light redirecting means (18) is rotatably reciprocatingly mounted around an axis (A1) parallel to said longitudinal direction such as to scan the width of said supporting surface in a plane (P) perpendicular to said longitudinal direction (L).

12. The system of claim 10 or 11, **characterized in that** it further comprises an array of detection devices (34) arranged upstream of said scanner assembly and covering the width (W) of said supporting surface (26), said detection devices being a plurality of inductive or capacitive sensors.

13. The system of claim 12, **characterized in that** said detection device is arranged below said supporting surface (26).

14. A process for analysing the chemical composition of a target material (100) with a system according to any of the claims 1 to 13, the process comprising the steps of:
[a] emitting a laser beam (4) on to the surface of said target material (100), such as to produce luminous plasma on said target material (100) and
[b] collecting the light emitted by said plasma, and
[c] isolating and measuring at least one selected emission band contained in the light emitted by said plasma,
**characterized in that**
[d] said light emitted by said plasma is collected collinearly with at least the section of the laser beam falling on said target material (100) for producing the luminous plasma and redirected onto the aperture of the light collector (8) of the system.
